# EUROPEAN PATENT APPLICATION

(11) **EP 2 469 460 A1**
(43) Date of publication of application: **27.06.2012**
(21) Application number: 10306474.7
(22) Date of filing: 21.12.2010
(51) Int. Cl.: G06Q 30/00

(54) **Computer-displayable content enriched with selected advertisement content**

(71) Applicant: FRANCE TELECOM, 75015 Paris (FR)
(72) Inventor: Hernandez Martinez, Julian, 28041, Madrid (ES)
(74) Representative: Cabinet Plasseraud

(57) **Abstract**

The present invention relates a method of providing a computer-displayable content enriched with selected advertisement, in response to a consumer's request for a content (Cᵢ) owned by a content owner (CO), the method comprising the steps of retrieving (130) the requested content (Cᵢ) from a list of contents provided by the content owner (CO), selecting (140) at least one advertisement content (Adⱼ) to be included in the computer-displayable content (CDCᵢ) corresponding to the requested readable content based on at least one rule (Rₖ) provided by the content owner (CO), generating (150) the computer-displayable content (CDCᵢ) corresponding to the requested content, the computer-displayable content comprising the requested content and the selected advertisement content and providing (160) the computer-displayable content (CDCᵢ) to the consumer. The present invention also relates to the corresponding platform system (eSAPP) as well as to a sponsoring system comprising such a platform system.

## Description

### Field of the invention

The present invention relates to a method and a platform system for providing consumers with computer-displayable contents enriched with selected advertisement. More specifically, the proposed method aims at providing such computer-displayable contents enriched with selected advertisement where the added advertisement is controlled by the owner of the content.

### Background of the invention

The recent advances in digital technology have boosted the development of new fields for the publishing industry, such as the so-called eBooks consisting of digitally stored books which can be downloaded online by consumers through the Internet network.

Recently, the advertising industry has shown interest in this new kind of online demand and some technical solutions have been developed in order to provide advertisements within the fast developing field of e-publishing.

US 2009/0171751 for instance describes a system wherein advertisements are added by an online content provider to readable content requested by consumers, in order to provide these consumers with advertisement enriched readable contents.

Such a technical solution presents nevertheless some drawbacks.

Among others, since the addition of the advertisement is performed by the online content provider itself, the owner of the initial content requested and download by the consumers does not have any control on the kind of advertisement which is combined with his content.

This can be detrimental to the image of the content owner if some advertisement related to topics contradicting with the topic of the requested content, are merged with the requested content by the online content provider. For instance, if adult content type of advertisement is accidentally provided with a requested content for children, the content owner's image will suffer from such an accidental choice.

### Summary of the invention

It is thus an object of the present invention to overcome the above-identified difficulties and disadvantages by proposing a solution wherein the content owner, and not the online content provider, can control the type of advertisement to be inserted with his content by the online content provider.

According to a first aspect of the present invention, there is provided a method of providing a computer-displayable content enriched with selected advertisement, in response to a consumer's request for a content owned by a content owner, the method comprising the steps of retrieving the requested content from a list of contents provided by the content owner, selecting at least one advertisement content to be included in the computer-displayable content corresponding to the requested readable content based on at least one rule provided by the content owner, generating the computer-displayable content corresponding to the requested content, the computer-displayable content comprising the requested content and the selected advertisement content and providing the computer-displayable content to the consumer. The content owner is thus able to control the type of advertisement to be inserted with the rule he provides.

In an embodiment of the present invention, a first plurality of advertisement contents is provided by a sponsor entity, the at least one advertisement content to be included in the computer-displayable content being selected among said first plurality of advertisement contents based on the rule provided by the content owner.

In an advantageous embodiment, a second plurality of advertisement contents is selected among the first plurality of advertisement contents based on the rule provided by the content owner, the at least one advertisement content to be included in the computer-displayable content being further selected among the second plurality of advertisement contents based on an analysis of the requested content. Here, the selection of advertisements is further refined to take into consideration the properties of the request content itself.

In particular, the analysis of the requested content comprises the determination of a number n_{Ad} of advertisement contents to be included in the computer-displayable content and the selection of n_{Ad} advertisement contents in the second plurality of advertisement contents, in order to define an appropriate proportion of advertisement to be mixed with the requested content.

In a further embodiment, the analysis of the requested content further comprises the determination of at least one advertisement insertion location, in the requested content, wherein advertisement content can be inserted, the generation of the computer-displayable content comprising the insertion of the n_{Ad} advertisement contents in the determined advertisement insertion locations of the requested content.

According to an embodiment of the present invention, one of the at least one rule provided by the content owner is a restriction rule which forbids the selection of advertisement contents having some properties unauthorised by the content owner.

In particular, the restriction rule forbids the selection of advertisement contents comprising content reserved to adults or related to alcoholic beverages.

In another embodiment, the restriction rule forbids the selection of advertisement contents provided by a sponsor entity unauthorised by the content owner. In particular, the unauthorised sponsor entity is at least one of a religious organisation, political parties and trade unions.

According to an embodiment of the invention, the at least one rule is comprised in a file received from the content owner before the selection of the advertisement content.

According to a second aspect of the present invention, there is provided a computer program product comprising instruction codes for implementing the steps of a method of providing a computer-displayable content as previously described, when loaded and run on processing means of a platform system.

According to a third aspect of the present invention, there is provided a platform system for providing a computer-displayable content enriched with selected advertisement, in response to a consumer's request for content owned by a content owner, the platform system comprising a publisher module configured to store a list of contents and at least one rule provided by the content owner, a sponsor module configured to store at least one advertisement content, a computer-displayable content generator module able to retrieve the content requested by the consumer from the list of contents stored in the publisher module and to select at least one of the advertisement content stored in the sponsor module based on the at least one rule stored in the publisher module, the computer-displayable content generator module being further configured to generate the computer-displayable content enriched with selected advertisement, comprising the retrieved content and the selected advertisement content, to be provided to the consumer.

In a further embodiment, the platform system further comprises a consumer module able to receive a request for content from a consumer and configured to transmit the computer-displayable content enriched with selected advertisement corresponding to the requested content to said consumer.

According to a fourth aspect of the present invention, there is provided a sponsoring system for providing contents enriched with selected advertisement to consumers, the sponsored system comprising the above-described platform system and at least one consumer equipment able to send a request for a content to the platform system, to receive a computer-displayable content enriched with selected advertisement corresponding to the requested content from the platform system and to display the computer-displayable content enriched with selected advertisement.

### Brief Description of the Drawings

Other features and advantages of the invention will become apparent from the following description of non-limiting exemplary embodiments, with reference to the appended drawings, in which:
- Figure 1 is flow chart illustrating the steps of a method of providing a computer-displayable content enriched with selected advertisement according to the present invention;
- Figure 2 is flow chart illustrating the substeps of a the advertisement selection step of the method of providing a computer-displayable content according to some embodiments of the present invention; and
- Figure 3 shows a simplified block diagram of a system including a platform system for providing a computer-displayable content enriched with selected advertisement according to the present invention.

### Detailed Description of the Invention

Next some embodiments of the present invention are described in more detail with reference to the attached figures.

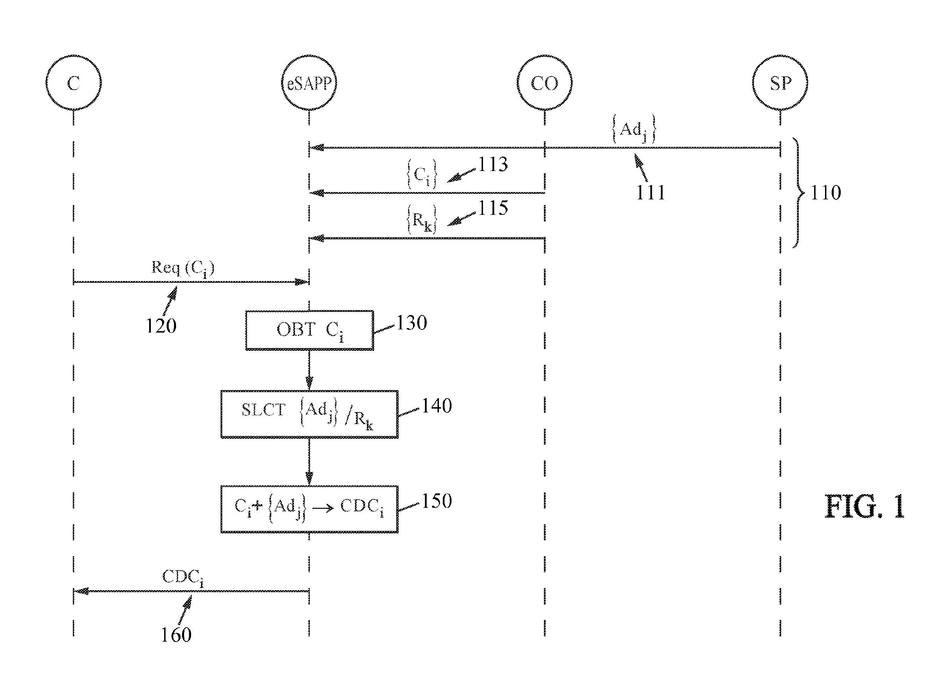

**Figure 1** shows a flow chart illustrating the steps of a method of providing a computer-displayable content enriched with selected advertisement according to the present invention.

Such a method involves the four following entities:
- a platform system eSAPP, which has the function of receiving content requests from consumers and providing, in return, sponsored computer-readable contents corresponding to these requests to these consumers. In the present invention, a sponsored computer readable content means a computer-readable content enriched with some advertisement;
- a consumer C, who uses a consumer equipment to send a request for a specific content to the platform system eSAPP, in order to obtain from this platform system eSAPP a sponsored computer-readable content corresponding to this request;
- a content owner CO, who uses a content owner equipment to provide the platform system eSAPP with a list of a contents Cᵢ, which are to be transformed into sponsored computer-readable contents when requested by consumers. In the present invention, the content owner is typically the author of the content, for instance the writer of a book or whoever has acquired the copyrights of that content, for instance the publisher of this book;
- a sponsor entity SP, which provides the platform system eSAPP with one or more advertisement content(s) to be inserted within computer-readable contents corresponding to contents requested by consumers. In the present invention, such as sponsor is typically an advertising company or a publicity agency.

The method begins with a preliminary step 110 wherein a certain number of substeps are performed in order to provide the platform system eSAPP with data from the sponsor entity SP and the content owner CO.

In particular, the sponsor entity SP transmits (advertisement providing step 111) a certain number of advertisement contents Ad₁,...,Adⱼ,...,Ad_{M} (wherein M≥1) to the platform system eSAPP. Such an advertisement content Adⱼ can be a multimedia file it can contains image(s), audio(s), text(s), and/or video(s), respectively in format like .jpg, .mp3, .smil, mpeg, etc.

On its side, the content owner transmits (content providing step 113) a certain number of contents C₁,...,Cᵢ,...,C_{N} (wherein N≥1) to the platform system eSAPP. In the present invention, such a content Cᵢ is typically a readable content, such as a book, a magazine, etc., which has been numerically converted into a digital file or natively created in a digital media.

Moreover, in an embodiment of the present invention, the content owner also provides (rule providing step 115) one or more rule(s) R₁,...,Rₖ,...,R_{L} (wherein L≥1), defined by the content owner itself, to the platform system eSAPP.

Such rules are to be used later on in the platform system eSAPP, in order to perform a real-time and automatic selection of the advertisement contents Adⱼ which can be merged with one of the contents Cᵢ provided by the content owner CO when it is requested by a consumer C.

Here, a rule Rₖ can be a restriction rule which forbids the association of an advertisement content Adⱼ with a topic specifically defined as forbidden by the content owner CO with one of his contents Cᵢ. Such a restriction rule can thus be implemented as a restriction filter which is able to recognize a forbidden-type of advertisement content Adⱼ, for instance by filtering out specific keywords or metadata.

The rules R₁,...,Rₖ,...,R_{L} can be provided within a specific file sent from the content owner CO to the platform eSAPP, when the content owner wishes to prepare the rules in his own equipment. In such a case, the invention can be easily implemented by the mere reception of a single file, from the content owner CO, which contains all the rules R₁,...,Rₖ,...,R_{L} defined by this content owner.

Alternatively, the rules R₁,...,Rₖ,...,R_{L} can be provided by the content owner CO directly interfacing with the platform system eSAPP, in order to define, amend or delete the rules in a more flexible way at the level of the platform system.

Once the preparation step 110 has been performed, the platform system eSAPP is ready to generate a sponsored computer-readable content CDCᵢ which is enriched with selected advertisement under the control of the content owner CO.

In order to generate such an advertisement enriched computer-readable content only on demand, a request for a content Cᵢ is advantageously received first from a consumer C by the platform system eSAPP (request step 120) before triggering the following steps of the method.

Once such a request designating a specific content Cᵢ has been received from the consumer C by the platform system eSAPP, the requested content Cᵢ is retrieved from the list of contents {Cᵢ}_{1≤i≤N} previously provided by the content owner CO, in the platform system eSAPP (content retrieval step 130).

Once the requested content Cᵢ has been retrieved, one or more advertisement content(s) to be included in the computer-displayable content corresponding to the requested content can be selected (advertisement selection step 140), based on one or more rules Rₖ previously provided by the content owner.

Once the advertisement content(s) to be included in the computer-displayable content has been selected in the platform system eSAPP, the computer-displayable content CDCᵢ corresponding to the requested content Cᵢ is generated (computer-displayable content generation step 150).

In particular, the computer-displayable content CDCᵢ comprises the requested content Cᵢ and the selected advertisement content(s) Adⱼ in order to obtain a computer-displayable content which has been enriched with some advertisement content controlled by the content owner CO of the content requested by the consumer C.

In an embodiment, the requested content Cᵢ and the selected advertisement content(s) Adⱼ can be merged or concatenated, in order for instance to display the selected advertisement content(s) before the requested content Cᵢ.

To ensure that the consumer sees the advertisement content without trying to jump over it when it is located before the requested content, the selected advertisement content(s) Adⱼ is inserted within the requested content Cᵢ in another embodiment. Such an insertion can be done regularly, and even periodically, within the requested content Cᵢ in order to ensure as much as possible that the consumer watches the advertisements.

Finally, once the computer-displayable content CDCᵢ corresponding to the requested content Cᵢ has been generated by the platform system eSAPP, this computer-displayable content CDCᵢ is provided to the consumer C (computer-displayable content providing step 160), for instance by transmitting this computer-displayable content CDCᵢ to the consumer equipment used by the consumer C.

The computer-displayable content can then be displayed on this consumer equipment in order to be read by the consumer C, who has thus access to advertisement(s) filtered by the content owner himself.

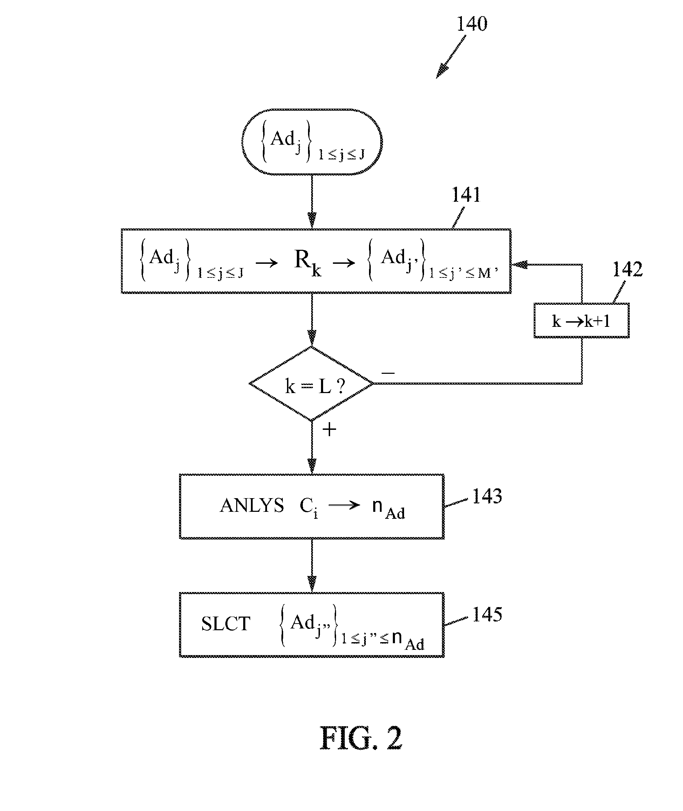

**Figure 2** is flow chart illustrating more in detail the substeps of the advertisement selection step 140 of the method of providing a computer-displayable content according to some embodiments of the present invention.

Here, the advertisement selection step 140 begins with a first selection step 141 wherein a first restricted list of advertisement contents {Ad_{j'}}_{1≤j≤M'} is selected among the initial list of advertisement contents {Adⱼ}_{1≤j≤J} provided by the content owner CO based on the a Rₖ defined by the content owner CO, wherein M≥M'≥1.

This first selection step 141 is performed in such a way as to possibly restrict the number advertisement contents that may be inserted in the computer-displayable content CDCᵢ if some of these advertisement contents are forbidden by the rule Rₖ. In such a case, these forbidden advertisement contents are removed from the list provided by the content owner CO in order to obtain the first restricted list of contents {Ad_{j'}}_{1≤j'≤M'} wherein M>M'≥1.

Naturally, if none of the advertisement content of the initial list {Adⱼ}_{1≤j≤J} is forbidden by the rule Rₖ, the first restricted list {Ad_{j'}} _{1≤j'≤M'} corresponds to the initial list {Adⱼ}_{1≤j≤J}.

When several rules R₁,...,Rₖ,...,R_{L} have been defined or provided by the content owner CO, this first selection step 141 is performed iteratively for every rule Rₖ until the L-th Rule R_{L}, as symbolised on figure 2 by the incremental step 142.

In that case, the first restricted list of contents {Ad_{j'}}_{1≤j≤M'} obtained at the end of these L iterative selection steps 141 contains only advertisement contents which abide by all the rules R₁ to R_{L} defined by the content owner CO. In other words, the list {Ad_{j'}}_{1≤j≤M'} is a list of advertisement contents allowed by the content owner CO.

In a first embodiment of the present invention, when a request Req(Cᵢ) for a specific content Cᵢ has been by the platform system eSAPP, it is then possible to select randomly, in this first restricted list of contents {Ad_{j'}}_{1≤j≤M'}, one or more allowed advertisement content(s) to be added to the requested content Cᵢ.

In another embodiment of the present invention, the advertisement contents to be inserted in the computer-displayable content are not only selected in accordance with a rule Rₖ defined by the content owner CO, but also in accordance with the properties of the content Cᵢ itself.

In this other embodiment, the advertisement selection step 140 further comprises a content analysis step 143 wherein the requested content Cᵢ is analysed in order to determine how many advertisement contents can be inserted in the computer-displayable content CDCᵢ corresponding to the requested content Cᵢ.

For instance, if the content Cᵢ is a book, this analysis comprises the steps of:
- counting the number of words and images in this book,
- defining a number of advertisement contents that may be inserted in such a book with a predefined ratio of advertisement content per original content (for instance one advertisement content for every thousand words or one for every five images). This ratio can be predefined by the owner of the platform system eSAPP, or advantageously by the content owner CO himself, in order to allow him deciding on the proportion of advertisement content to be added to his content;
- finding out the passages of the book where these advertisement contents are advantageously be inserted. Examples of such passages can be the beginning or the end of the original content, or at pages substantially dividing equally the original content according to the above-mentioned predefined ratio;
- marking these passages. For instance, the original file content can be modified with a special character string marking the place where the advertisement content should be inserted in view of the restriction rules defined previously.

Such an analysis results in the determination of a number n_{Ad} of advertisement contents that can be inserted in the computer-displayable content CDCᵢ, wherein such a number n_{Ad} depends on intrinsic properties of the requested content Cᵢ.

Once this number n_{Ad} has been determined, the advertisement selection step 140 comprises a second selection step 145 wherein a second list of advertisement contents {Ad_{j'}}_{1≤j"≤nAd} is selected among the first restricted list {Ad_{j'}}_{1≤j'≤M'}, for instance randomly or according to a specific order of priority.

These n_{Ad} selected advertisement contents Ad1,...,Ad_{j"},...,Ad_{nAd} can thus be inserted with the requested content Cᵢ within the computer-displayable content CDCᵢ in a way that is both adequate with the intrinsic properties of the requested content Cᵢ itself and the requirements of the content owner CO in terms of advertising content.

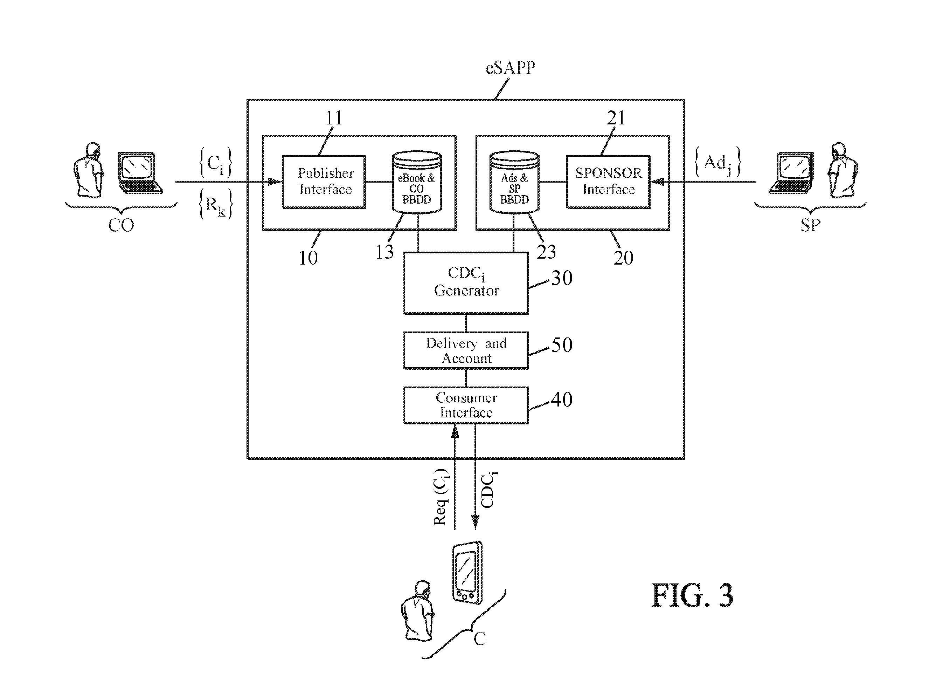

**Figure 3** shows a simplified block diagram of a system including a platform system for providing a computer-displayable content enriched with selected advertisement according to the present invention.

In the system illustrated in figure 3, a content owner CO, a sponsor entity SP and a consumer C are communicating with a platform system eSAPP arranged to perform the steps of the method of providing a computer-displayable content enriched with selected advertisement according to the present invention.

More precisely, the content owner CO uses a content owner equipment in order to transmit a list of contents {Cᵢ}_{1≤i≤N}, (wherein N≥1), as well as one or more rule (s) {rₖ}_{1≤k≤L}, (wherein L≥1), to the platform system eSAPP. Such content owner equipment can be a personal computer, a server, or any computing equipment able to transmit such kinds of content data.

Similarly, the sponsor entity SP uses a sponsor equipment in order to transmit a list of advertisement contents {Adⱼ}_{1≤j≤M}, (wherein M≥1) to the platform system eSAPP. Such sponsor equipment can be a personal computer, a server, or any computing equipment able to transmit such kinds of content data.

Finally, the consumer C uses a consumer equipment in order to transmit a request Req(Cᵢ) for a specific content Cᵢ, wherein this specific content Cᵢ is designated, to the platform system eSAPP, as well as to receive, in response to this request Req(Cᵢ), a computer-displayable content CDCᵢ corresponding to this content Cᵢ from the platform system eSAPP.

This consumer equipment can be a personal computer, a notebook, an ebook reader, an eReader device, an ePaper device, a mobile phone, a tablet or any other kind of computer equipment able to send a request, receive computer-displayable contents and display such computer-displayable contents.

The platform system eSAPP comprises several modules able to perform some of the steps of the present method of providing a computer-displayable content enriched with selected advertisement.

Among others, the platform system eSAPP comprises a publisher module 10 able to receive and store the list of contents {Cᵢ}_{1≤i≤N} and the rule(s) {Rₖ}_{1≤k≤L} provided by the content owner CO.

Such a publisher module 10 comprises thus a publisher interface module 11 able to receive the list of contents {Cᵢ}_{1≤i≤N} and rules {Rₖ}_{1≤k≤L} from the content owner CO and a publisher data storage module 13 wherein the received list of contents {Cᵢ}_{1≤i≤N} and rules {Rₖ}_{1≤k≤L} are stored.

This publisher interface module 21 can be configured to cooperate with a client interface module installed on the content owner's equipment, in a typical server-client relationship.

In particular, the publisher interface module 11 is configured to allow the content owner CO to provide restriction rules which forbid the selection of advertisement contents with properties unauthorised by the content owner CO.

Such restriction rules are advantageously received beforehand, as a list of rules {Rₖ}_{1≤k≤L}, as shown in step 115 of figure 1, in order to optimise the advertisement selection process. However, the present invention is not limited to this case and new restriction rules can be defined and added to the stored list of rules {Rₖ}_{1≤k≤L}, or currently stored rules can be amended or deleted, at any time by the content owner through to the publisher interface module 11.

For instance, the content owner CO may establish a restriction rule Rₖ which forbids the platform system to use sensitive matters related to adult content industry or services, alcoholic beverages, or whatever product or service that should be offered only for adults.

Moreover, the publisher interface module 11 is configured to allow the content owner CO to establish restriction rules which forbid advertisement contents coming from entities defined by the content owner CO.

For instance, the content owner CO may establish a restriction rule Rₖ which forbids the platform system to use advertising contents from sensitive organisations such as religious organisations, political parties or trade unions.

It is also possible for the content owner CO to establish a restriction rule Rₖ which forbids the platform system to use advertising contents from certain specific industries, sectors and or companies.

The publisher interface module 11 is also configured to allow the content owner CO to decide if he wishes to introduce a disclaimer about relationship among authors, content and advertisement will be inserted. Such a disclaimer can be a default one or a specified one.

The publisher interface module 11 may be further configured to register the content owner CO, for instance by receiving the following data, related to the content owner CO:
o Name, surname, nationality, passport or national id number, email address, mobile phone number, house phone number, postal address, ZIP code, nationality, bank account (IBAN), and a secure password, date of birth.
o Email address which can be used as username to identify the content owner.
o Password, for instance a password with at least 6 characters and 2 numbers and a maximum of 40 characters.

During the registration process of the content owner CO, the content owner can be requested by publisher interface module 11 to accept the "terms and conditions" where the responsibilities of each actor in the system are well explained.

In order to complete this registration process, the content owner CO can be requested by publisher interface module 11 to accept also the "personal data" handling.

The publisher interface module 11 can also verify the email address of the content owner CO, for instance by sending a message to this content owner CO in order to check this email address. The content owner CO is then requested to read the message and confirm the registering process by clicking a link on the received message.

The publisher interface module 11 can also verify the mobile phone number of the content owner CO, by sending him a one time password is going to be sent. Such a password is then requested during in the confirmation process, to assure that the registered content owner CO has access to this mobile phone.

The publisher interface module 11 also allows the content owner CO to change its associated data, such as his password, email, postal address, etc.

The publisher interface module 11 is further configured to authenticate the content owner CO with his username and the password defined during the registration process. For instance, after 3 wrong tries, an email is sent to the content owner's email address and the content owner's account is blocked.

The publisher interface module 11 can also request the content owner CO to insert a verification word printed out on the screen of his equipment, like an image, in order to check that the content owner CO is not a robot.

The publisher interface module 11 is further configured to allow the content owner to edit the publishing parameters of his contents, such as for instance the stored restriction rules.

To that purpose, a browse and upload input field can be provided to select content files, (e.g. as ePub files). Once the content file is select and uploaded, the inserted metadata is collected and fulfil all the equivalent fields, e.g. Author, Publishing, etc.

In particular, the content owner CO may define the following metadata (the fields with asterisks could be set as been mandatory):
o Title (*),Author(s) (*), Publication date (*), Language (*), Publisher, Genre, Collection, ISBN number, Tag (*), Price (*), Cover, Synopsis;
o Category (*) such as Arts & Photography , Biographies & Memoirs , Business & Economics, Children, Christianity, Comics & Graphic Novels, Computers & Internet, Cooking, Crafts & Hobbies, Diet & Health, Education & Language, Engineering, Entertainment, Games, Gay & Lesbian, History, Home & Garden, Horror, Humour, Law, Literature & Fiction, Medicine & Science, Mystery & Crime, Parenting & Families, Pets, Poetry, Reference, Religion & Spirituality, Romance, Science Fiction & Fantasy, Self-Improvement, Sex & Relationships, Sports & Adventure, Teens, Travel, and so on.

The publisher module 10 may be further configured to keep activity logs of the content owner, for instance to keep IP address (and MAC address if possible) connection dates and times, as well as new and old values of fields.

Such a sponsor module 20 comprises thus a sponsor interface module 21, able to receive this list of advertisement contents {Adⱼ}_{1≤j≤M} from the sponsor entity SP, and a sponsor storage module 23 wherein the received list of advertisement contents {Adⱼ}_{1≤j≤M} is stored.

This sponsor interface module 21 can be configured to cooperate with a client interface module installed on the sponsor's equipment, in a typical server-client relationship.

This sponsor interface module 21 is configured to perform the registration of the sponsor entity SP with the platform system eSAPP.

During this sponsor registration process, the following data must be provided to the platform system, though the sponsor interface module 21: Company name, Company type ( agency or direct advertiser), VAT Identifier, etc), Representative details (name, surname, nationality, date of birth, passport or national id number, email address, mobile phone number, work phone number, postal address, nationality, bank account (IBAN), secure password), Email address to be used as username to identify the sponsor and Password, for instance a password having at least 6 characters and 2 numbers and a maximum of 40 characters.

In order to complete the sponsor registration process, the sponsor interface module 21 can be further configured to request the consumer to accept the "terms and conditions", where the responsibilities of each actor in the system are explained, as well as the "personal data" handling.

The sponsor interface module 21 can be further configured to check the sponsor's email address, by sending a check message to this email address. The sponsor entity SP must read the message and confirm the registering process by clicking a link on the received message.

The sponsor interface module 21 can be further configured to check the sponsor's mobile phone number, by sending a one time password to the sponsor. Such a password is then requested during the confirmation process of the registration of the sponsor, in order to ensure that the registered sponsor has access to this mobile phone.

The sponsor interface module 21 can also be configured to check the sponsor's IBAN account, for instance by charging a first prepaid charge, as well as to allow the sponsor changing its associated data, such as password, email address, postal address, etc. The sponsor interface module 21 can be further configured to authenticate the sponsor with its username and password defined during the above-mentioned sponsor registration process.

For instance, after three wrong tries, an email can be sent to the sponsor's email address and the account is blocked. It is also possible to request the sponsor to insert a verification word printed out on his equipment screen, like an image, in order to check that the sponsor is not a robot.

The sponsor interface module 21 can be configured to launch the display, on the consumer's equipment, of a browse and upload input field in order to select a file (with an extension such as jpeg, png, gif, bmp, etc) with the proper size. Once the file has been selected on the sponsor's equipment, it is uploaded as an advertisement content Adⱼ in the platform system eSAPP by the sponsor interface module 21.

The sponsor interface module 21 can be further configured to configure the advertisement rules, as follows:
- The sponsor entity SP must define the following data, the fields with asterisks being advantageously requested in a mandatory way:
   o Company name (*), Campaign name (*), Start delivery date (*), End delivery date (*), Language (*)
   o Do the product /service belong to the following category? Adult content or Services, Alcoholic beverages or whatever product or service that should be offered only for adults.
   o Does the Advertisement Company or organization belong to the following category? Religious, Political parties, Trade union.
   o Select preferred categories (*) among the following:
      Arts & Photography, Biographies & Memoirs, Business & Economics, Children, Christianity, Comics & Graphic Novels, Computers & Internet, Cooking, Crafts & Hobbies, Diet & Health, Education & Language, Engineering, Entertainment, Games, Gay
      & Lesbian, History, Home & Garden, Horror, Humour, Law, Literature & Fiction, Medicine & Science, Mystery & Crime, Parenting & Families, Pets, Poetry, Reference, Religion & Spirituality, Romance, Science Fiction & Fantasy, Self-Improvement, Sex & Relationships, Sports & Adventure, Teens and Travel.

The platform system eSAPP further comprises a content generator module 30, connected to both publisher module 10 and sponsor module 20.

The computer-displayable content generator module 30 is thus able to retrieve a requested content Cᵢ from the list of contents {C₁}_{1≤i≤N} stored in the publisher module and one or more rule(s) Rₖ also stored in the publisher module 10.

Furthermore, the computer-displayable content generator module 30 is able to select at least one of the advertisement content(s) Adⱼ stored in the sponsor module 20 based on the one or more rule(s) Rₖ retrieved from the publisher module.

The computer-displayable content generator module 30 is further configured to generate a computer-displayable content CDCᵢ corresponding to the requested content Cᵢ enriched with the selected advertisement content(s) Adⱼ. In other words, this computer-displayable content CDCᵢ comprises at least the retrieved content Cᵢ and the selected advertisement content(s) Adⱼ, wherein the retrieved content Cᵢ and the selected advertisement content(s) Adⱼ are merged, for instance, or wherein the selected advertisement content(s) Adⱼ are inserted within the retrieved content Cᵢ.

This computer-displayable content generator module 30 can be embodied by processing means such as a processor or a micro-processor, for instance.

The platform system eSAPP further comprises a consumer interface module 40, able to receive a request Req(Cᵢ) for a content Cᵢ sent by the consumer C and to transmit, in return, the computer-displayable content CDCᵢ generated by the computer-displayable content generator module 30 to this consumer C.

This consumer interface module 40 can be configured to cooperate with a client interface module installed on the consumer's equipment, in a typical server-client relationship.

Similarly to the content owner interface module, the consumer interface module 40 is configured to perform the registration of the consumer C with the platform system eSAPP.

During this registration process, the following data can be provided to the platform, though the consumer interface module 40:
o Name, surname, nationality, passport or national id number, email address, mobile phone number, work phone number, postal address- Street, city, county, country, zip code-, and a secure password, date of birth and alias/nickname.
o Email address to be used as username to identify the consumer.
o Password, for instance a password having at least 6 characters and 2 numbers and a maximum of 40 characters.

In order to complete the registration process, the consumer interface module 40 can be further configured to request the consumer to accept the "terms and conditions", where the responsibilities of each actor in the system are explained, as well as the "personal data" handling wherein personal data are inserted in the computer-displayable content CDCi delivered to the consumer C in order to discourage this consumer to freely distribute this content.

The consumer interface module 40 can be further configured to check the consumer's email address, by sending a check message to this email address. The consumer C must read the message and confirm the registering process by clicking a link on the received message.

The consumer interface module 40 can be further configured to check the consumer's mobile phone number, by sending a one time password to the consumer. Such a password is then requested during the confirmation process of the registration of the consumer, in order to ensure that the registered consumer has access to this mobile phone.

The consumer interface module 40 can be further configured to allow the consumer changing its associated data, such as password, email address, postal address, etc, as well as to authenticate the consumer with its username and password defined during the above-mentioned registration process.

For instance, after three wrong tries, an email is sent to the consumer's email address and the account is blocked. It is also possible to request the consumer to insert a verification word printed out on his equipment screen, like an image, in order to check that the consumer is not a robot.

The consumer interface module 40 can be further configured to authenticate the consumer with its username and password defined during the above-mentioned registration process.

The consumer interface module 40 can be also configured to keep activity logs of the consumer, for instance by keeping IP address (and MAC address if possible) used by the consumer.

In order to carry out the purchase of computer-displayable content corresponding to a specific content Cᵢ, the consumer interface module 40 can be configured to perform the following operations:
- A search page with an input field to enter search text criteria can be displayed on a consumer's equipment connecting to the platform system eSAPP. The text criteria can be checked in Title and Author(s) name fields on this search page. By default, the search will be done in all the languages and all the countries.
- The consumer can also select a language, a country or both, to narrow down the search criteria.
- A search engine will look for whatever title or author that contains the criteria words regardless if the match is with all the words or only one.
- The result output of the search will be shortened, the one with biggest matching first, showing thumbnail, title, author and general rating of each title.
- Optionally, if an already downloaded content (for instance a book) is selected to be download again by the consumer, the same sponsored computer-displayable content (for instance a sponsored eBook) can be regenerated, which includes the same advertisement contents, and it is unnecessary to add any new record to either the content owner CO or the sponsor entity SP.

The consumer interface module 40 can be further configured to provide the consumer with an access to a website where all his downloads are registered, and are shown shortened by delivery date, the list will contain, title, author, delivery date, personal rating, average rating and comments. The personal rating will be part of the average rating, the comments can be private or public, if the comments are public those ones can be shown to other consumers.

The platform system eSAPP may further comprise an accounting module 50 connected between the computer-displayable content generator module 30 and the consumer interface module 40.

Such an accounting module 50 is configured to perform statistics and accounting operations on the delivered sponsored computer-displayable contents.

For instance, in order to allow the sponsor entity SP to have a wide view of advertisement delivery, the accounting module 50 can generate sponsor accounting reports per campaign, showing the number of sponsored contents delivered to different users, number of advertising images included per sponsored contents, the type of displayed advertising images.

Such sponsor accounting reports can be in the form of a list including the following fields:
- Campaign Name;
- Number of Downloaded sponsored contents,
- Number of Included Advertisement contents,
- Accounted or Not Accounted.

If a Campaign Name is selected by the sponsor entity SP, a new list with each download record will be displayed, which contains the following data:
- computer-displayable content title,
- Content owner identity,
- Customer identity,
- Download date and time number of inserted advertisement contents, number of displayed advertisement contents.

These sponsor accounting reports, once generated in the accounting module 50, are transmitted by the sponsor interface module 20 to the sponsor entity SP.

With such accounting reports, for instance sent monthly by email, the sponsor entity SP is thus able to make further statistical analysis on a predetermined period determined by a "start date" and an "end date".

Beside, the content owner CO may also want to obtain a wider view of the downloaded contents. In such a case, the accounting module 50 is configured to generate content accounting reports wherein the following fields could be displayed: Title, Publication Date, Number of Downloaded per content, Accounted, Not Accounted.

If a specific title is selected by the content owner, a new list with each download record can be displayed with the following data: customer identity, download date and time, sponsored (yes/no), included adds, revenues.

These content accounting reports, once generated in the accounting module 50, are transmitted by the publisher interface module 10 to the content owner CO.

The publisher interface module 11 is thus able to provide the content owner with content accounting reports for a specific time period defined between a "start date" and an "end date". Such content accounting reports can be prepared and sent to the content owner every month, for instance by email.

In figure 3, a sponsoring system for providing contents enriched with selected advertisement to consumers is thus described , wherein the sponsored system comprises the above-described platform system eSAPP and at least one consumer equipment able to send a request for a content Req(Ci) to the platform system, to receive a computer-displayable content enriched with selected advertisement CDCᵢ corresponding to the requested content Cᵢ from the platform system and to display the computer-displayable content enriched with selected advertisement CDCᵢ.

A consumer can thus subscribe to such a sponsoring system and obtain from the organisation managing this sponsoring system equipment allowing him to watch computer-displayable contents sponsored by advertisements.

The invention also relates to a computer program product that is able to implement any of the method steps as described above when loaded and run on the processing means of a platform system, for instance in the above-described computer-displayable content generator module 30 of the platform system eSAPP.

The computer program may be stored or distributed on a suitable medium supplied together with or as a part of other hardware, but may also be distributed in other forms, such as via the Internet or other wired or wireless telecommunication systems.

While the invention has been illustrated and described in detail in the drawings and foregoing description, such illustration and description are to be considered illustrative or exemplary and not restrictive, the invention being not restricted to the disclosed embodiments. Other variations to the disclosed embodiments can be understood and effected by those skilled in the art in practicing the claimed invention, from a study of the drawings, the disclosure and the appended claims.

For the sake of illustrating the present invention, a single consumer C, a single content owner CO and a single sponsor entity SP have been described in the aforementioned description of the method and system for providing a computer-displayable content enriched with selected advertisement.

However, the present invention is not limited to this case and it is naturally obvious that any number of consumers, content owners and sponsors can interact with the platform system described in the present description in order to carry out the present invention.

Furthermore, an embodiment wherein the advertisement enriched computer-readable content is generated on demand has been described beforehand. However, in another embodiment, such an advertisement enriched computer-readable content may be generated in advance, by preparing directly the advertisement enriched computer-readable content for each of the contents Cᵢ of the list of contents {Cᵢ} provided by the content owner CO during the content providing step 113, without waiting for a requesting designating a specific content Cᵢ.

## Claims

1. A method of providing a computer-displayable content enriched with selected advertisement, in response to a consumer's request for a content (Cᵢ) owned by a content owner (CO), the method comprising the steps of:
retrieving (130) the requested content (Cᵢ) from a list of contents provided by the content owner (CO);
selecting (140) at least one advertisement content (Adⱼ) to be included in the computer-displayable content (CDCᵢ) corresponding to the requested readable content based on at least one rule (Rₖ) provided by the content owner (CO);
generating (150) the computer-displayable content (CDCᵢ) corresponding to the requested content, the computer-displayable content comprising the requested content and the selected advertisement content; and
providing (160) the computer-displayable content (CDCᵢ) to the consumer.

2. The method of providing a computer-displayable content according to claim 1, wherein a first plurality of advertisement contents ({Adⱼ}) is provided (111) by a sponsor entity (SP), the at least one advertisement content to be included in the computer-displayable content (CDCᵢ) being selected (141) among said first plurality of advertisement contents based on the rule (Rₖ) provided by the content owner.

3. The method of providing a computer-displayable content according to claim 2, wherein a second plurality of advertisement contents ({Ad_{j'}}) is selected among the first plurality of advertisement contents ({Adj}) based on the rule (Rₖ) provided by the content owner, the at least one advertisement content to be included in the computer-displayable content being further selected (145) among the second plurality of advertisement contents ({Adj'}) based on an analysis of the requested content (Cᵢ).

4. The method of providing a computer-displayable content according to claim 3, wherein the analysis of the requested content (Cᵢ) comprises the determination (143) of a number n_{Ad} of advertisement contents to be included in the computer-displayable content and the selection (145) of n_{Ad} advertisement contents in the second plurality of advertisement contents ({Ad_{j'}}).

5. The method of providing a computer-displayable content according to claim 4, wherein the analysis of the requested content (Cᵢ) further comprises the determination of at least one advertisement insertion location, in the requested content (Cᵢ), wherein an advertisement content can be inserted, the generation (150) of the computer-displayable content (CDCᵢ) comprising the insertion of the n_{Ad} advertisement contents in the determined advertisement insertion locations of the requested content (Cᵢ).

6. The method of providing a computer-displayable content according to any one of claims 1 to 5, wherein one of the at least one rule (Rₖ) provided by the content owner is a restriction rule which forbids the selection of advertisement contents having some properties unauthorised by the content owner (CO).

7. The method of providing a computer-displayable content according to claim 6, wherein the restriction rule forbids the selection of advertisement contents comprising content reserved to adults or related to alcoholic beverages.

8. The method of providing a computer-displayable content according to any one of claims 1 to 7, wherein the restriction rule forbids the selection of advertisement contents provided by a sponsor entity unauthorised by the content owner.

9. The method of providing a computer-displayable content according to claim 8, wherein the unauthorised sponsor entity is at least one of a religious organisation, political parties and trade unions.

10. The method of providing a computer-displayable content according to any one of claims 1 to 9, wherein the at least one rule (Rₖ) is comprised in a file received (115) from the content owner (CO) before the selection of the advertisement content.

11. A computer program product comprising instruction codes for implementing the steps of a method of providing a computer-displayable content according to any one of claims 1 to 9 when loaded and run on processing means of a platform system.

12. A platform system (eSAPP) for providing a computer-displayable content enriched with selected advertisement (CDCᵢ), in response to a consumer's request for content (Cᵢ) owned by a content owner (CO), the platform system comprising:
a publisher module (10) configured to store a list of contents ({Cᵢ}) and at least one rule (Rₖ) provided by the content owner;
a sponsor module (20) configured to store at least one advertisement content (Adⱼ) ;
a computer-displayable content generator module (30) able to retrieve the content (Cᵢ) requested by the consumer from the list of contents ({Cᵢ}) stored in the publisher module (10) and to select at least one of the advertisement content (Adⱼ) stored in the sponsor module (20) based on the at least one rule (Rₖ) stored in the publisher module;
the computer-displayable content generator module (30) being further configured to generate the computer-displayable content enriched with selected advertisement (CDCᵢ), comprising the retrieved content (Cᵢ) and the selected advertisement content (Adⱼ), to be provided to the consumer.

13. A platform system according to claim 11, further comprising a consumer module (40) able to receive a request for content (Req(Cᵢ)) from a consumer and configured to transmit the computer-displayable content enriched with selected advertisement (CDCᵢ) corresponding to the requested content (Cᵢ) to said consumer.

14. Sponsoring system for providing contents enriched with selected advertisement to consumers, the sponsored system comprising:
a platform system (eSAPP) according to any one of claims 11 or 12;
at least one consumer equipment able to send a request for a content (Req(Cᵢ)) to the platform system, to receive a computer-displayable content enriched with selected advertisement (CDCi) corresponding to the requested content (Cᵢ) from the platform system and to display the computer-displayable content enriched with selected advertisement (CDCᵢ).
